(19) **Europäisches Patentamt**

**European Patent Office**

**Office européen des brevets**

(11) Veröffentlichungsnummer: **0 464 375 A1**

(12) # EUROPÄISCHE PATENTANMELDUNG

(21) Anmeldenummer: **91108932.4**

(22) Anmeldetag: **31.05.91**

(51) Int. Cl.5: **B60T 8/48**

(30) Priorität: **05.07.90 DE 4021454**

(43) Veröffentlichungstag der Anmeldung:
**08.01.92 Patentblatt 92/02**

(84) Benannte Vertragsstaaten:
**DE ES GB IT**

(71) Anmelder: **ROBERT BOSCH GmbH**
**Postfach 10 60 50**
**W-7000 Stuttgart 10(DE)**

(72) Erfinder: **Kirstein, Lothar, Dipl.-Ing.**
**Leiterweg 51**
**W-7257 Ditzingen(DE)**

(54) **Hydraulische Bremsanlage.**

(57) Eine hydraulische Bremsanlage mit Blockier-schutzsystem (ABS) und Antriebsschlupfregelung (ASR) für Kraftfahrzeuge weist ein Hydroaggregat (20) mit mindestens einem Steuerventil (31-43) und einer Rückförderpumpe (35) mit mindestens einen selbstansaugend ausgebildeten Pumpenelement (36) auf, das in dem das mindestens eine Antriebsrad (11,12) enthaltenen Bremskreis wirksam ist. Zur Bremsdruckbereitstellung im ASR-Betrieb ist eine Ventilanordnung (46) vorgesehen. Zwecks einfacher Ausbildung dieser Ventileinheit (46) weist diese neben einem in einer Saugleitung (50) zwischen Pumpenelement (36) und Bremsflüssigkeitsbehälter (18) angeordneten Ladeventil (47) ein zwischen dem Hauptbremszylinder (15) und dem Steuerventil (43) eingeschaltetes Umschaltventil (48) auf, das drei hydraulische Steuereingänge (51-53) und eine Rückstellfeder (54) aufweist, von denen der eine Steuereingang (51) mit dem Ausgang des Pumpenelements (36) und die beiden diesem Steuereingang entgegenwirkenden Steuereingänge mit dem Ventilein- bzw. -ausgang verbunden sind. Ein zwischen dem ersten und zweiten Steuereingang (51,52) angeschlossenes Rückschlagventil (55) mit paralleler Drossel (46) sorgt für eine ausreichende Druckdifferenz zum Umschalten des Umschaltventils (48) beim Druckaufbau am Ausgang des Pumpenelements (36).

Fig. 1

## Stand der Technik

Die Erfindung geht aus von einer hydraulischen Bremsanlage mit Blockierschutzsystem (ABS) und Antriebsschlupfregelung (ASR) für Kraftfahrzeuge der im Oberbegriff des Anspruchs 1 definierten Gattung.

Bei einer bekannten Bremsanlage dieser Art, die als Zweikreisbremsanlage mit Vorderachs/Hinterachs- oder vorne/hinten-Bremskreisaufteilung ausgebildet ist (DE 38 16 073 A1) ist das Umschaltventil in der Verbindungsleitung zwischen Hauptbremszylinder und Hydroaggregat als 3/2-Wegemagnetventil mit Federrückstellung ausgebildet, das in seiner unerregten Grundstellung die Verbindungsleitung durchgängig hält und damit sowohl die den Radbremszylindern der Antriebsräder zugeordneten Steuerventile als auch den Ausgang des im Bremskreis der Antriebsräder wirksamen Pumpenelements mit dem Hauptbremszylinder verbindet und in seiner bei Antriebsschlupfregelung herbeigeführten Umschaltstellung die Verbindungsleitung auftrennt und den Ausgang des Pumpenelements über eine Reihenschaltung aus zwei Druckbegrenzungsventilen mit dem Bremsflüssigkeitsbehälter verbindet. Das Umschaltventil wird von der Steuerelektronik gesteuert und immer dann umgeschaltet, wenn mindestens eines der Antriebsräder Schlupf zeigt. Gleichzeitig damit wird die Rückförderpumpe eingeschaltet. Das im Bremskreis der Antriebsräder wirksame, selbstansaugend ausgebildete Pumpenelement saugt über das Ladeventil Bremsflüssigkeit aus dem Bremsflüssigkeitsbehälter an und erzeugt einen Bremsversorgungsdruck, der über die Steuerventile in die Radbremszylinder des oder der schlüpfenden Antriebsräder eingesteuert wird. Überschüssige Bremsflüssigkeit wird über das Umschaltventil und die Druckbegrenzungsventile in den Bremsflüssigkeitsbehälter zurückgefördert.

## Vorteile der Erfindung

Die erfindungsgemäße Bremsanlage mit den kennzeichnenden Merkmalen des Anspruchs 1 hat den Vorteil, daß die Ventilanordnung für die Bremsdruckbereitstellung bei Antriebsschlupfregelung rein hydraulisch ausgebildet ist und keine Bauteile aufweist, die eine elektrische Ansteuerung erforderlich machen. Die einzelnen Bauteile der Ventilanordnung lassen sich damit besser integrieren.

Bei Antriebsschlupfregelung wird ausschließlich die Rückförderpumpe eingeschaltet. Das mindestens eine einem Antriebsrad zugeordnet, selbstansaugende Pumpenelement saugt in bekannter Weise über das geöffnete Ladeventil Bremsflüssigkeit aus dem Bremsflüssigkeitsbehälter an und erzeugt ausgangsseitig einen Bremsversorgungsdruck.

Durch die dabei am Rückschlagventil sich einstellende Druckdifferenz wird das hydraulische 2/2-Wegeventil in seine Sperrstellung umgeschaltet. Der Hauptbremszylinder ist damit vom Bremskreis des mindestens ein Antriebsrad aufweisenden Bremskreises abgetrennt. Die dem Rückschlagventil parallel geschaltete Drossel ist so bemessen, daß die Druckdifferenz auch während der Saugphase des Pumpenelements in ausreichender Höhe erhalten bleibt. Dabei ist auch die Dämpferkammer am Ausgang des Pumpenelements als Speicher hilfreich. Bei Wegfall der Antriebsschlupfregelung wird das 2/2-Wegeventil von seiner Rückstellfeder zurückgesetzt und damit die Verbindung zwischen Hauptbremszylinder und Hydroaggregat wieder hergestellt. Bei Bremspedalbetätigung wird - auch während der Antriebsschlupfregelung - das 2/2-Wegeventil über seinen dritten Steuereingang in jedem Fall zurückgesetzt, wodurch sichergestellt ist, daß auch bei Antriebsschlupfregelung über das Bremspedal eingebremst werden kann. Bei zweikreisiger Ausbildung der Bremsanlage bleiben auch bei Antriebsschlupfregelung die beiden Bremskreise voneinander getrennt.

Durch die in den weiteren Ansprüchen aufgeführten Maßnahmen sind vorteilhafte Weiterbildungen und Verbesserungen der im Anspruch 1 angegebenen Bremsanlage möglich.

Bei einer bevorzugten Ausführungsform der Erfindung ist die am Druckbegrenzungsventil angeschlossene Rückführleitung mit dem Bremsflüssigkeitsbehälter verbunden. Das Druckbegrenzungsventil weist einen weiteren Steuereingang auf, der dem mit dem Ventileingang verbundenen Steuereingang entgegenwirkt und mit dem Bremskreisausgang des Hauptbremszylinders verbunden ist, so daß der Druck am Bremskreisausgang des Hauptbremszylinders als ein dem Einlaßdruck des Druckbegrenzungsventils entgegenwirkender Steuerdruck an dem Druckbegrenzungsventil anliegt. Damit bei Bremspedalbetätigung das Druckbegrenzungsventil gesperrt und verhindert, daß Bremsflüssigkeit über das Druckbegrenzungsventil in den Bremsflüssigkeitsbehälter strömt.

Bei einer alternativen Ausführungsform der Erfindung ist die am Druckbegrenzungsventil angeschlossene Rückführleitung mit dem Bremskreisausgang des Hauptbremszylinders verbunden. In diesem Fall entfällt der zweite Steuereingang des Druckbegrenzungsventils.

In einer weiteren vorteilhaften Ausführungsform der Erfindung sind das hydraulische 2/2-Wegeventil, das Rückschlagventil und die dem Rückschlagventil parallel geschaltete Drossel zu einer Baueinheit zusammengefaßt.

Die erfindungsgemäße Bremsanlage kann als Zweikreisbremsanlage für Motorräder oder für Kraftwagen ausgebildet werden, letztere sowohl mit diagonaler Bremskreisaufteilung als auch mit Vorderachs/Hinterachs-Bremskreisaufteilung. Bei diagonaler Bremskreisaufteilung können zusätzlich noch sog. Plunger vorgesehen werden, wie sie aus der DE 36 33 687 A1 bekannt sind und im Bremskreis der Antriebsräder liegen.

Zeichnung

Die Erfindung ist anhand von in der Zeichnung dargestellten Ausführungsbeispielen in der nachfolgenden Beschreibung näher erläutert. Es zeigen:

Fig. 1 und 2     jeweils ein Blockschaltbild einer Zweikreisbremsanlage mit Blockierschutzsystem und Antriebsschlupfregelung für einen Personenkraftwagen, und zwar mit einer vorne/hinten-Bremskreisaufteilung (Fig. 1) bzw. einer diagonalen Bremskreisaufteilung (Fig. 2),

Fig. 3     einen Längsschnitt einer Baueinheit aus hydraulischem Zweiwegeventil und Rückschlagventil mit paralleler Drossel in der Zweikreisbremsanlage in Fig. 1 oder 2,

Fig. 4     ausschnittweise ein Blockschaltbild einer Zweikreisbremsanlage mit Blockierschutzsystem, Antriebsschlupfregelung und vorne/hinten-Bremskreisaufteilung gemäß einem weiteren Ausführungsbeispiel.

Beschreibung der Ausführungsbeispiele

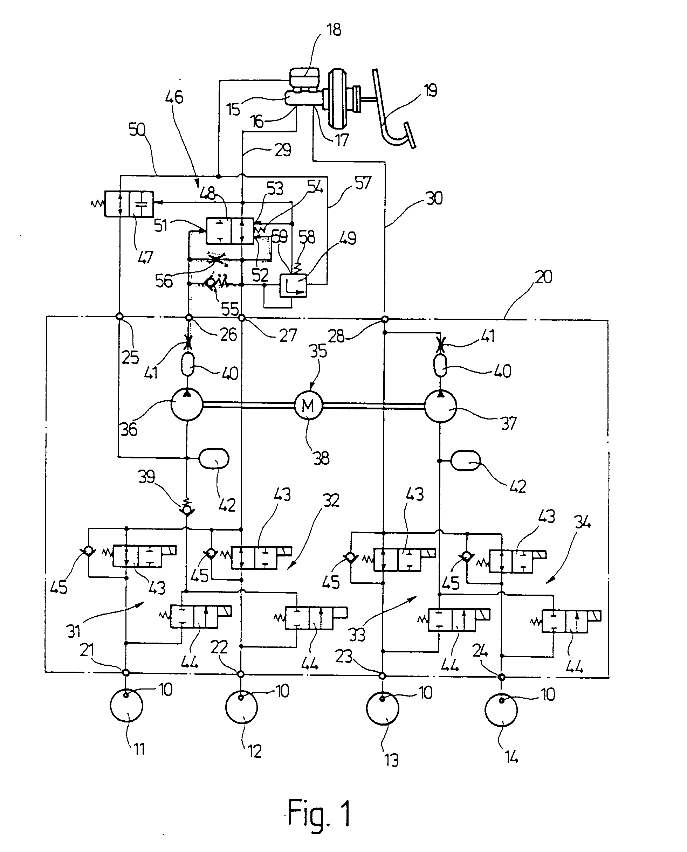

Bei der in Fig. 1 im Blockschaltbild dargestellten hydraulischen Zweikreisbremsanlage mit vorne/hinten- oder Vorderachs/Hinterachs-Bremskreisaufteilung, Blockierschutzsystem (ABS) und Antriebsschlupfregelung (ASR), letztere auch Vortriebsregelung genannt, für einen Personenkraftwagen sind die Radbremszylinder 10 der angetriebenen Räder 11,12 in dem einen Bremskreis und die Radbremszylinder 10 der nicht angetriebenen Räder 13,14 in dem anderen Bremskreis angeordnet. Im allgemeinen sind dabei die Antriebsräder 11,12 die Hinterräder des Personenkraftwagens. Zu der Zweikreisbremsanlage gehört in an sich bekannter Weise ein Hauptbremszylinder 15, der zwei getrennte Bremskreisausggänge 16,17 zum Anschließen jeweils eines der beiden Bremskreise aufweist und mit einem Bremsflüssigkeitsbehälter 18 in Verbindung steht. Bei der Betätigung eines Bremspedals 19 wird ein gleich großer Bremsdruck an den beiden Bremskreisausgängen 16,17 ausgesteuert.

Zu der Zweikreisbremsanlage gehört ferner ein Vierkanal-Hydroaggregat 20, das vier Auslaßkanäle 21 - 24 und vier Einlaßkanäle 25 - 28 aufweist. Die beiden Einlaßkanäle 27 und 28 sind über je eine Verbindungsleitung 29 bzw. 30 mit einem Bremskreisausgang 16 bzw. 17 verbunden. An jedem Auslaßkanal 21 - 24 ist ein Radbremszylinder 10 der Räder 11 - 14 angeschlossen. Jedem Auslaßkanal 21 - 24 ist ein Steuerventil 31 - 34 zugeordnet. Die Steuerventile 31 - 34 werden von einer hier nicht dargestellten Steuerelektronik gesteuert und bauen einen radschlupfabhängigen Bremsdruck in den zugeordneten Radbremszylindern 10 auf. Eine Rückförderpumpe 35, die Bestandteil des Vierkanal-Hydroaggregats 20 ist, weist zwei Pumpenelemente 36,37 auf, die von einem Elektromotor 38 gemeinsam angetrieben werden und zum Rückfördern von Bremsflüssigkeit beim Druckabbau in den Bremsen dienen. Jeweils ein Pumpenelement 36 bzw. 37 ist in einem Bremskreis wirksam und eingangsseitig mit den dem Bremskreis zugeordneten Steuerventilen 31,32 bzw. 33,34 verbunden, wobei in der Verbindung zwischen dem im Bremskreis der Antriebsräder 11,12 wirksamen Pumpenelement 36 und den diesem Bremskreis zugehörigen Steuerventilen 31,32 ein Rückschlagventil 39 mit zum Pumpenelement 36 weisender Durchflußrichtung angeordnet ist. Außerdem ist das selbstansaugend ausgebildete Pumpenelement 36 eingangsseitig an dem Einlaßkanal 25 des Vierkanal-Hydroaggregats 20 angeschlossen. Ausgangsseitig ist das Pumpenelemet 36 mit dem Einlaßkanal 26 und das Pumpenelement 37 mit dem Einlaßkanal 28 des Vierkanal-Hydroaggregats 20 verbunden, wobei in jeder Verbindung eine Dämpferkammer 40 mit nachgeschalteter Drosselstelle 41 angeordnet ist. An den Eingängen der beiden Pumpenelemente 36,37 ist jeweils ein Niederdruckspeicher 42 angeschlossen, die zur temporären Aufnahme von aus den Radbremszylindern 10 abfließender Bremsflüssigkeit dient. Jedes Pumpenelement 36,37 besitzt ein Pumpeneinlaßventil und ein Pumpenauslaßventil, die hier der Übersichtlichkeit halber nicht dargestellt sind.

Jedes Steuerventil 31 - 34 wird von einer Ventileinheit aus einem Einlaßventil 43 und einem Auslaßventil 44 gebildet. Die Einlaßventile 43 ermöglichen dabei in ihrer Grundstellung einen ungehinderten Durchlaß von den Einlaßkanälen 27,28 zu den Auslaßkanälen 21 - 24 und zu den Radbremszylindern 10 der Räder 11 - 14. In der durch Magneterregung herbeiführbaren Arbeitsstellung sperren die Einlaßventile 43 diesen Durchgang. Die Auslaßventile 44 verbinden in ihrer durch Magneterregung herbeiführbaren Arbeitsstellung die Auslaßkanäle 21 - 24 und damit die Radbremszylinder 10 mit dem Eingang der zugeordneten Pumpenelemente 36,37 und sperren in ihrer unerregten Grundstellung diese Verbindung. In der Verbindung der Auslaßventile 44 der den Antriebsrädern 11,12 zugeordneten Steuerventile 31,32 ist das bereits erwähnte Rückschlagventil 39 enthalten. Den Einlaßventilen 43 ist jeweils ein Rückschlagventil 45 mit zu den Einlaßkanälen 27,28 weisender Durchflußrichtung parallel geschaltet.

Eine Ventilanordnung 46 dient zur Bereitstellung eines Bremsversorgungsdrucks bei Antriebsschlupfregelung (ASR-Betrieb). Die Ventilanordnung 46 weist hierzu ein Ladeventil 47 und ein Umschaltventil 48, die beide als hydraulisch gesteuerte 2/2-Wegeventile ausgebildet sind, und ein Druckbegrenzungsventil 49 auf. Das Ladeventil 47 ist in einer Saugleitung 50 angeordnet, die den Einlaßkanal 25 des Vierkanal-Hydroaggregats 20 mit dem Bremsflüssigkeitsbehälter 18 verbindet. Der gegen eine Rückstellfeder wirkende Steuereingang des Ladeventils 47 ist an der Verbindungsleitung 29 zwischen Bremskreisausgang 16 des Hauptbremszylinders 15 und Einlaßkanal 27 des Vierkanal-Hydroaggregats 20 angeschlossen. In seiner ungesteuerten Grundstellung hält das Ladeventil 47 die Saugleitung 50 durchgängig. Die Saugleitung 50 wird dagegen abgesperrt, wenn durch Bremspedalbetätigung am Bremskreisausgang 16 und damit in der Verbindungsleitung 29 ein Bremsdruck ausgesteuert wird. Das Umschaltventil 48 ist in der Verbindungsleitung 29 zwischen Bremskreisausgang 16 des Hauptbremszylinders 15 und Einlaßkanal 27 des Vierkanal-Hydroaggregats 20 angeordnet. Es weist drei hydraulische Steuereingänge 51 - 53 und eine Rückstellfeder 54 auf. Der erste Steuereingang 51 ist an dem Einlaßkanal 26, der zweite Steuereingang 52 an dem Einlaßkanal 27 des Vierkanal-Hydroaggregats 20 und der dritte Steuereingang 53 an dem Bremskreisausgang 16 des Hauptbremszylinders 15 angeschlossen. Bei drucklosen Steuereingängen 51 - 53 hält die Rückstellfeder 54 das Umschaltventil 48 in seiner Grundstellung, in welcher die Verbindungsleitung 29 durchgängig geschaltet ist. In der Umschaltstellung wird die Verbindungsleitung 29 gesperrt. Zur Erzeugung passender Steuerdrücke an den Steuereingängen 51 - 53 ist zwischen dem ersten und zweiten Steuereingang 51 und 52, also zwischen den Einlaßkanälen 26 und 27 des Vierkanal-Hydroaggregats 20 ein Rückschlagventil 55 mit zum zweiten Steuereingang 52 weisender Durchlaßrichtung eingeschaltet. Dem Rückschlagventil 55 ist eine Drossel 56 parallel geschaltet. Das Druckbegrenzungsventil 49 ist eingangsseitig an dem Einlaßkanal 27 und ausgangsseitig an einer zu dem Bremsflüssigkeitsbehälter 18 führenden Bremsflüssigkeits-Rückführleitung 57 angeschlossen. Es weist einen zusätzlichen Steuereingang 59 auf, dessen Steuerdruck gleichwirkend mit der Kraft einer Rückstellfeder 58 dem Einlaßdruck des Druckbegrenzungsventils 49 entgegenwirkt. Dieser Steuereingang 59 ist an dem Bremskreisausgang 16 des Hauptbremszylinders 15 angeschlossen.

Bei Auftreten von Antriebsschlupf an mindestens einem der Antriebsräder 11,12 wird die Rückförderpumpe 35 eingeschaltet. Das selbstansaugende Pumpenelement 36 im Bremskreis der Antriebsräder 11,12 saugt nunmehr über das Ladeventil 47 Bremsflüssigkeit aus dem Bremsflüssigkeitsbehälter 18 ab und speist diese unter Druck über das Rückschlagventil 55 und die Steuerventile 31,32 in die Radbremszylinder 10 der Antriebsräder 11,12 ein. Durch die am Rückschlagventil 55 und damit an den beiden Steuereingängen 51,52 des Umschaltventils 48 entstehende Druckdifferenz wird letzteres umgeschaltet, und der Hauptbremszylinder 15 wird von dem Bremskreis der Antriebsräder 11,12 getrennt. Schlüpft nur ein Antriebsrad, beispeilsweise das Antriebsrad 11, so wird das Einlaßventil 43 des dem nicht schlüpfenden Antriebsrad 12 zugeordneten Steuerventils 32 umgesteuert, so daß der Radbremszylinder 10 des nicht schlüpfenden Antriebsrads 12 von dem Bremsversorgungsdruck abgesperrt ist. Über das Einlaßventil 43 des Steuerventils 31 wird nunmehr Bremsdruck ausschließlich in dem Radbremszylinder 10 des durchdrehenden Antriebsrades 11 aufgebaut, das damit abgebremst wird. Der erforderliche Bremsdruck wird durch Druckmodulation, die durch Schalten des Ein- und Auslaßventils 43,44 bewirkt wird, eingestellt. Überschüssige Bremsflüssigkeit wird über das Druckbegrenzungsventil 49 und die Rückführleitung 57 in den Bremsflüssigkeitsbehälter 18 zurückgefördert. Gegen Ende der Antriebsschlupfregelung, wenn kein Antriebsschlupf mehr sensiert wird, wird sowohl das Einlaßventil 43 als auch das Auslaßventil 44 des Steuerventils 31 umgesteuert. Bei dieser Stellung des Steuerventils 31 fließt Bremsflüssigkeit aus dem Radbremszylinder 10 des Antriebsrads 11 über das Rückschlagventil 39 in den Niederdruckspeicher 42 ab und wird von hier von dem Pumpenelement 36 über das Druckbegrenzungsventil 49 und die Rückführleitung 57 in den Bremsflüssigkeitsbehälter 18 zurückgefördert. Der Bremsdruck wird wieder abgebaut und der Niederdruckspeicher 42 leergefördert, so daß bei einem anschließenden ABS-Betrieb die volle Aufnahmekapazität des Niederdruckspeichers 42 zum Bremsdruckabbau zur Verfügung steht. Anschließend wird die Rückförderpumpe 35 abgeschaltet. Bei drucklosen Steuereingängen 51 - 53 stellt die Rückstellfeder 54 das Umschaltventil 48 in seine Grundstellung zurück, in welcher die Verbindung des Vierkanal-Hydroaggregats 20 mit dem Hauptbremszylinder 15 wieder hergestellt ist. Bei Antriebsschlupf beider Antriebsräder werden die Ein- und Auslaßventile 43,44 beider Steuerventile 33,32 in der beschriebenen Weise angesteuert.

Bei Bremspedalbetätigung steht der am Bremskreisausgang 16 des Hauptbremszylinders 15 ausgesteuerte Bremsdruck sowohl am Steuereingang 53 des Umschaltventils 48 als auch am Steuereingang 59 des Druckbegrenzungsventils 49 an. Dieser Druck ist im Regelfall immer größer als der bei Antriebsschlupfregelung am Steuereingang 51 auftretende Druck, so daß das Umschaltventil 48 in jedem Fall in seine Grundstellung zurückgesetzt wird. Gleichzeitig wird das Druckbegrenzungsventil 49 über den Steuereingang 59 in seiner Schließstellung blockiert, so daß Bremsflüssigkeit nicht aus der Verbindungsleitung 29 über das Druckbegrenzungsventil 49 und die Rückführleitung 57 in den Bremsflüssigkeitsbehälter 18 abfließen kann. Damit ist jederzeit, auch während des ASR-Betriebs, ein Einbremsen in den Bremskreis der Antriebsräder 11,12 bei Bremspedalbetätigung möglich.

Die in Fig. 4 im Blockschaltbild und ausschnittweise dargestellte Zweikreisbremsanlage mit vorne/hinten-Bremskreisaufteilung ist gegenüber der in Fig. 1 dargestellten Zweikreisbremsanlage insofern modifiziert, als die am Ausgang des Druckbegrenzungsventils 49 angeschlossene Rückführleitung 57 nicht mit dem Bremsflüssigkeitsbehälter 18 sondern mit dem Bremskreisausgang 16 des Hauptbremszylinders 15 verbunden ist. Damit wird bei Antriebsschlupfregelung die überschüssige Bremsflüssigkeit nicht in den Bremsflüssigkeitsspeicher 18, sondern in den Hauptbremszylinder 15 zurückgefördert. Bei dieser Modifizierung entfällt der zusätzliche Steuereingang 59 am Druckbegrenzungsventil 49, da bei Bremspedalbetätigung am Ein- und Ausgang des Druckbegrenzungsventils 49 ein gleich großer Bremsdruck ansteht. Im übrigen stimmt die Zweikreisbremsanlage mit der in Fig. 1 überein, so daß gleiche Bauteile mit gleichen Bezugszeichen gekennzeichnet sind.

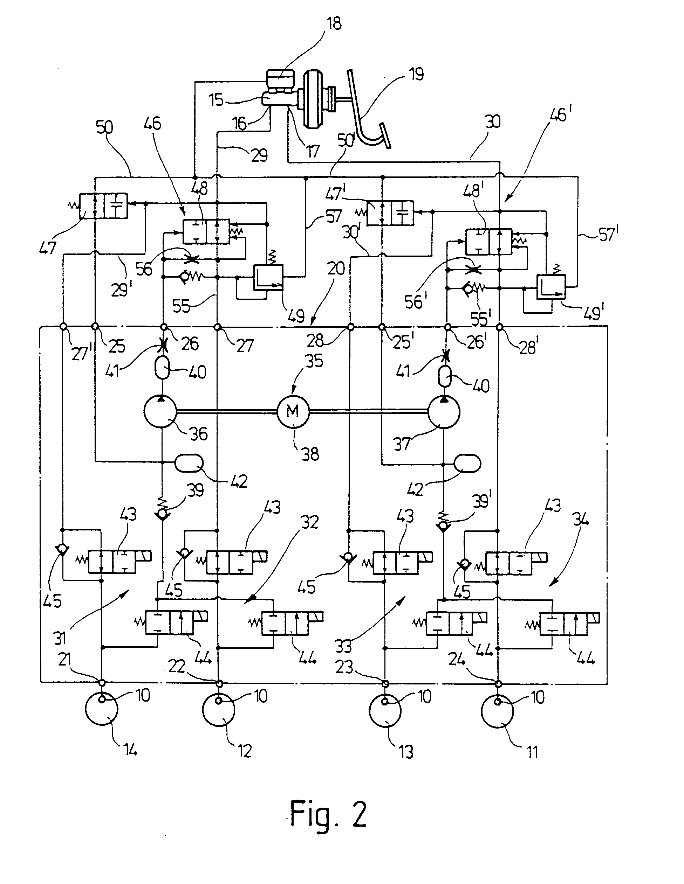

Bei der in Fig. 2 im Blockschaltbild dargestellten hydraulischen Zweikreisbremsanlage mit diagonaler Bremskreisaufteilung gehören die Antriebsräder 11,12 zwei unterschiedlichen Bremskreisen an. Im allgemeinen sind die Antriebsräder 11,12 die Vorderräder des Personenkraftwagens. Soweit die Zweikreisbremsanlagen mit der in Fig. 1 beschriebenen Zweikreisbremsanlage mit vorne/hinten-Bremskreisaufteilung übereinstimmt, sind gleiche Bauelemente mit gleichen Bezugszeichen versehen. Zusätzlich zur Ventilanordnung 46 ist eine identisch ausgebildete Ventilanordnung 46' vorhanden, wobei jeweils eine Ventilanordnung 46,46' einem Bremskreis zugeordnet ist. Das Vierkanal-Hydroaggregat 20' weist zusätzliche vier Einlaßkanäle 25' - 28' auf, wobei alle Einlaßventile 43 der Steuerventile 31 - 34 an einen separaten Einlaßkanal 27',27,28',28 geführt sind, die ihrerseits über Verbindungsleitungen 29',29 mit dem Bremskreisausgang 16 des Hauptbremszylinders 15 bzw. über Verbindungsleitungen 30',30 mit dem Bremskreisausgang 17 des Hauptbremszylinders 15 verbunden sind. Das nunmehr ebenfalls selbstansaugend ausgebildete Pumpenelement 37 ist ausgangsseitig über die Dämpferkammer 40 mit dem Einlaßkanal 26' verbunden, und in der eingangsseitigen Verbindung des Pumpenelements 37 zu dem Auslaßventil 44 des Steuerventils 33 ist ein weiteres Rückschlagventil 39' mit zum Pumpenelement 37 gerichteter Durchlaßrichtung eingeschaltet. Der Eingang des Pumpenelements 37 ist zusätzlich mit dem Einlaßkanal 25' verbunden. Der Radbremszylinder 10 des nicht angetriebenen Rades 13 ist an dem Auslaßkanal 23 angeschlossen, während der Radbremszylinder 10 des Antriebsrades 11 an dem Auslaßkanal 24 des Vierkanal-Hydroaggregats 20' liegt.

Von den identisch ausgebildeten Ventilanordnungen 46,46' ist jeweils das Ladeventil 47 bzw. 47' in der beschriebenen Weise in der Speiseleitung 50 bzw. 50' zwischen Bremsflüssigkeitsbehälter 18 und dem Einlaßkanal 25 bzw. 25' angeordnet. Das Umschaltventil 48 bzw. 48' liegt wiederum in der Verbindungsleitung 29 bzw. 30 vom Bremskreisausgang 16 bzw. 17 zum Einlaßkanal 27 bzw. 28. Das Druckbegrenzungsventil 49 bzw. 49' ist eingangsseitig an dem Einlaßkanal 27 bzw. 28 und ausgangsseitig an der zum Bremsflüssigkeitsbehälter 18 führenden Rückführleitung 57 bzw. 57' angeschlossen. Auch bei der zweiten Ventilanordnung 46' ist wiederum die Parallelschaltung von Rückschlagventil 55' und Drossel 56' zwischen Einlaßkanal 26' und Einlaßkanal 28 angeschlossen, so daß diese Parallelschaltung zwischen erstem und zweitem Steuereingang des Umschaltventils 48' wirksam ist. Die Wirkungsweise der Zweikreisbremsanlage mit diagonaler Bremskreisaufteilung im ASR-Betrieb ist die gleiche, wie zu Fig. 1 beschrieben.

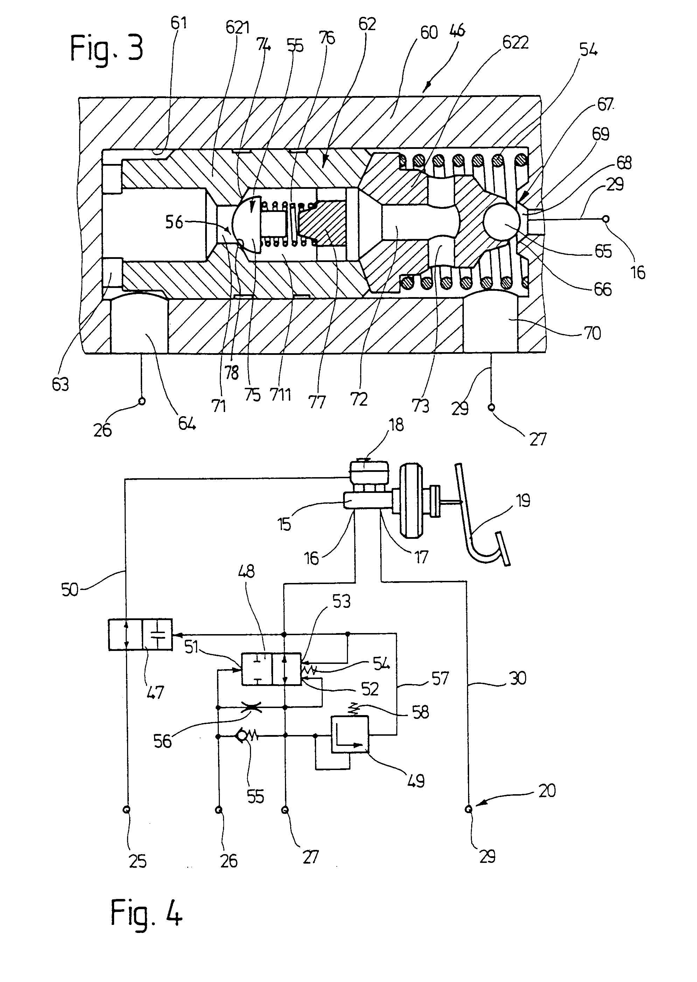

In der Ventilanordnung 46 gemäß Fig. 1 können - ebenso wie in der Ventilanordnung 46' gemäß Fig. 2 - die Bauelemente Umschaltventil 48, Rückschlagventil 55 und Drossel 56 zu einer Baueinheit vereinigt werden, wie dies in Fig. 3 dargestellt ist. In einem Ventilgehäuse 60 ist ein in einem Ventilraum 61 verschiebbaren Kolben 62 angeordnet, der aus zwei Teilkolben 621 und 622 besteht. Der Teilkolben 621 begrenzt links in Fig. 3 eine Steuerkammer 63, die über einen Anschluß 64 mit dem Einlaßkanal 26 des Vierkanal-Hydroaggregats 20 verbunden ist. Der Teilkolben 622 legt sich unter der Wirkung der Rückstellfeder 54 an den Teilkolben 621 an, und trägt auf seiner vom Teilkolben 621 abgekehrten Stirnseite ein kugelförmiges Ventilglied 65 eines Sitzventils 67, das mit einem Ventilsitz 66 zusammenwirkt. Der Ventilsitz 66 umgibt eine Ventilöffnung 68, die mit einem Anschluß 69 in Verbindung steht, der über einen Leitungsabschnitt der Verbindungsleitung 29 mit dem Bremskreisausgang 16 des Hauptbremszylinders 15 verbunden ist. Im Bereich des Teilkolbens 622 mündet ein dritter Anschluß 70 im Ventilraum 61, der über einen Leitungsabschnitt der Verbindungsleitung 29 mit dem Einlaßkanal 27 des Vierkanal-Hydroaggregats 20 verbunden ist.

Bei druckloser Steuerkammer 63 hebt das Ventilglied 65 unter der Wirkung der Rückstellfeder 54 vom Ventilsitz 66 ab, und das Sitzventil 67 ist geöffnet. Die Verbindungsleitung 29 ist durchgängig und der Bremskreisausgang 16 des Hauptbremszylinders 15 ist mit dem Einlaßkanal 27 des Vierkanal-Hydroaggregats 20 verbunden. Wird in die Steuerkammer 63 über den Anschluß 64 ein Steuerdruck eingesteuert, so verschiebt der Kolben 62 sich in Fig. 3 nach rechts gegen die Kraft der Rückstellfeder 54, das Ventilglied 65 setzt sich auf dem Ventilsitz 66 auf, und das Sitzventil 67 ist geschlossen. Die Verbindungsleitung 29 ist abgesperrt. Wird bei geschlossenem Sitzventil 67 ein Druck am Anschluß 69 aufgebaut, so verschiebt dieser über das Ventilglied 65 den Kolben 62 in Fig. 3 nach links und das Sitzventil 67 öffnet. Ein am Anschluß 70 anstehender Druck wirkt ebenfalls in Öffnungsrichtung auf den Teilkolben 622. Damit sind die in Fig. 1 schematisch angedeuteten Steuereingänge 51,52 und 53 des Umschaltventils 48 realisiert.

Der Teilkolben 621 ist von einer Längsbohrung 71 durchzogen, während der Teilkolben 622 eine dazu koaxiale Sackbohrung 72 trägt, die nahe des Sackgrundes von einer Querbohrung 73 durchdrungen wird. Die Längsbohrung 71 weist einen durchmessergrößeren Bohrungsabschnitt 711 auf, in dem das Rückschlagventil 55 mit paralleler Drossel 56 angeordnet ist. Am Übergang der Längsbohrung 71 zum Bohrungsabschnitt 711 ist ein Ventilsitz 74 ausgebildet, mit dem ein Ventilglied 75 zusammenwirkt, das sich über eine Ventilschließfeder 76 an einem Anschlag 77 abstützt. Ventilsitz 74 und/oder Ventilglied 75 sind so ausgebildet, daß sich bei Auflage des Ventilglieds 75 auf dem Ventilsitz 74 zwischen diesen eine Drossel 56 ergibt. Wie gezeigt, weist hierzu das Ventilglied 75 einen Durchlaß 78, z.B. eine Defektstelle, auf.

## Patentansprüche

1. Hydraulische Bremsanlage mit Blockierschutzsystem (ABS) und Antriebsschlupfregelung (ASR) für Kraftfahrzeuge mit einem mindestens einen Bremskreisausgang aufweisenden Hauptbremszylinder zum Aussteuern eines Bremsdrucks bei Bremspedalbetätigung, mit einem mit dem Hauptbremszylinder in Verbindung stehenden Bremsflüssigkeitsbehälter, mit einem an mindestens einem Bremskreisausgang angeschlossenen Hydroaggregat, das mindestens einen Auslaßkanal zum Anschließen eines einem Antriebsrad des Fahrzeugs zugehörigen Radbremszylinders, mindestens ein einerseits über eine Verbindungsleitung an dem Bremskreisausgang und andererseits an dem Auslaßkanal angeschlossenes Steuerventil und eine Rückförderpumpe mit mindestens einem selbstansaugend ausgebildeten Pumpenelement aufweist, das eingangsseitig über das Steuerventil mit dem Auslaßkanal und ausgangsseitig über eine Dämpferkammer mit der Verbindungsleitung verbunden ist, und mit einer Ventilanordnung zur Bereitstellung eines Bremsversorgungsdrucks bei Antriebsschlupfregelung, die ein mit seinem hydraulischen Steuereingang an dem Bremskreisausgang angeschlossenes Ladeventil mit Federrückstellung, das zumindest bei Antriebsschlupfregelung das Pumpenelement mit dem Bremsflüssigkeitsbehälter verbindet und bei Bremspedalbetätigung diese Verbindung sperrt, ein in der Verbindungsleitung angeordnetes Umschaltventil, das diese bei Antriebsschlupfregelung sperrt, und ein Druckbegrenzungsventil aufweist, das bei Antriebsschlupfregelung die Ausgangsseite des Pumpenelements mit einer Bremsflüssigkeits-Rückführleitung verbindet, dadurch gekennzeichnet, daß das Umschaltventil (48;48') als hydraulisch gesteuertes Zweiwegeventil mit drei hydraulischen Steuereingängen (51-53) und einer Rückstellfeder (54) ausgebildet ist, von denen der den übrigen Steuereingängen (52,53) und der Rückstellfeder (54) entgegenwirkende erste Steuereingang (51) an der Ausgangsseite der Dämpferkammer (40), der zweite Steuereingang (52) an dem zwischen Umschaltventil (48) und Steuerventil (43) liegenden Leitungsabschnitt der Verbindungsleitung (29) und der dritte Steuereingang (53) an dem Bremskreisausgang (16) des Hauptbremszylinders (15) angeschlossen ist, daß zwischen dem ersten und zweiten Steuereingang (51,52) ein Rückschlagventil (55) mit zum zweiten Steuereingang (52) weisender Durchlaßrichtung und mit dazu paralleler Drossel (56) angeschlossen ist und daß das Druckbegrenzungsventil (49) eingangsseitig an dem zwischen Umschaltventil (48) und Steuerventil (43) liegenden Leitungsabschnitt der Verbindungsleitung (29) und andererseits an der Bremsflüssigkeits-Rückführleitung (57) angeschlossen ist.

2. Bremsanlage nach Anspruch 1, dadurch gekennzeichnet, daß die Bremsflüssigkeit-Rückführleitung (57) mit dem Bremsflüssigkeitsbehälter (18) verbunden ist und daß der am Bremskreisausgang (16) des Hauptbremszylinders (15) ausgesteuerte Bremsdruck als ein dem Einlaßdruck des Druckbegrenzungsventils (49) entgegenwirkender Steuerdruck an das Druckbegrenzungsventil (49) gelegt ist.

3. Bremsanlage nach Anspruch 2, dadurch gekennzeichnet, daß das Druckbegrenzungsventil (49) einen dem mit dem Ventileingang verbundenen Steuereingang entgegenwirkenden zweiten Steuereingang (59) aufweist, der mit dem Bremskreisausgang (16) des Hauptbremszylinders (15) verbunden ist.

4. Bremsanlage nach Anspruch 1, dadurch gekennzeichnet, daß die Bremsflüssigkeit-Rückführleitung (57) mit dem Bremskreisausgang (16) des Hauptbremszylinders (15) verbunden ist.

5. Bremsanlage nach einem der Ansprüche 1 - 4, dadurch gekennzeichnet, daß das Umschaltventil (48), das Rückschlagventil (55) und die Drossel (56) zu einer Baueinheit zusammengefaßt sind.

6. Bremsanlage nach einem der Ansprüche 1 - 5, dadurch gekennzeichnet, daß in der Verbindung zwischen dem Eingang des Pumpenelements (36) und dem Steuerventil (31) ein Rückschlagventil (39) mit zum Pumpenelement weisender Durchlaßrichtung eingeschaltet ist.

7. Bremsanlage nach einem der Ansprüche 1 - 6, gekennzeichnet durch ihre Ausbildung als Zweikreisbremsanlage mit zwei voneinander getrennten, an je einem Bremskreisausgang (16,17) des Hauptbremszylinders (15) angeschlossenen Bremskreisen, bei welcher die Radbremszylinder (10) der Antriebsräder (11,12) in einem einzigen Bremskreis oder in beiden Bremskreisen angeordnet sind.

8. Bremsanlage nach einem der Ansprüche 1 - 7, **dadurch gekennzeichnet,** daß die Drossel (56) des Rückschlagventils (55) dadurch gebildet ist, daß das Ventilglied (75) und/oder der zugeordnete Ventilsitz (74) einen Durchlaß (78), z.B. eine Defektstelle, aufweist, mittels dessen bei Auflage auf dem Ventilsitz (74) eine Drosselwirkung erzeugbar ist.

Fig. 1

Fig. 2

Fig. 3

Fig. 4

**Europäisches Patentamt**

**EUROPÄISCHER RECHERCHENBERICHT**

Nummer der Anmeldung

**EP 91 10 8932**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 218 480 (BOSCH)<br>* das ganze Dokument *<br>– – – | 1 | B 60 T 8/48 |
| A | US-A-4 902 075 (HARUHIKO UNO)<br>* Spalte 2, Zeile 22 - Spalte 3, Zeile 29; Figur 1 *<br>– – – – – | 1 | |

| | RECHERCHIERTE SACHGEBIETE (Int. Cl.5) |
|---|---|
| | B 60 T |

Der vorliegende Recherchenbericht wurde für alle Patentansprüche erstellt

| Recherchenort | Abschlußdatum der Recherche | Prüfer |
|---|---|---|
| Berlin | 10 Oktober 91 | BLURTON M D |